# EUROPEAN PATENT SPECIFICATION

(11) **EP 3 597 280 B1**
(45) Date of publication and mention of the grant of the patent: **10.04.2024**
(21) Application number: 19186953.6
(22) Date of filing: 18.07.2019
(51) Int. Cl.: A23L 11/00, A23L 11/30, C11B 1/10, B01D 11/02, A23J 1/00, C11B 3/00

(54) **MISCELLA CLEANUP FOLLOWING EXTRACTION**
MISCELLA-REINIGUNG NACH EINER EXTRAKTION
NETTOYAGE AU MISCELLA À LA SUITE D'UNE EXTRACTION

(30) Priority: 19.07.2018 US 201862700646 P
(43) Date of publication of application: 22.01.2020
(73) Proprietor: Crown Iron Works Company, Blaine, MN 55449 (US)
(72) Inventor: DANELICH, Alexander, Plymouth, Minnesota 55446 (US)
(74) Representative: Dragotti & Associati S.R.L.

(56) References cited:
- US-A- 2 949 364
- US-A- 4 144 229
- US-A- 4 486 353
- US-A1- 2004 137 127
- US-A1- 2013 323 380
- US-A1- 2016 286 840
- US-A1- 2017 151 298
- US-A1- 2018 296 940

## Description

### CROSS-REFERENCE

### TECHNICAL FIELD

This disclosure relates to solvent extraction and, more particularly to liquid-solvent extraction.

### BACKGROUND

A variety of different industries use extractors to extract and recover liquid substances entrained within solids. For example, producers of oil from renewable organic sources use extractors to extract oil from oleaginous matter, such as soybeans, rapeseed, sunflower seed, peanuts, cottonseed, palm kernels, and corn germ. The oleaginous matter is contacted with an organic solvent within the extractor, causing the oil to be extracted from a surrounding cellular structure into the organic solvent. As another example, extractors are used to recover asphalt from shingles and other petroleum-based waste materials. Typically, the petroleum-based material is ground into small particles and then passed through an extractor to extract the asphalt from the solid material into a surrounding organic solvent.

During operation, the selected feedstock is passed through the extractor and contacted with a solvent. The solvent can extract oil out of the feedstock to produce an oil deficient solids discharge and a miscella stream. The solvent-wet solids discharge is typically thermally processed, for example using a desolventiser-toaster, to recover solvent from the solvent-wet solids discharge. The resulting dried solid may or may not be further processed to prepare the material for end sale or use.

For example, when processing a soy feedstock, the solvent-wet soy meal produced from extraction may be dried and then subject to a secondary extraction process to remove sugars and carbohydrates. This secondary extraction process can produce a second miscella stream and a solvent-wet soy protein concentrate. Examples are found in US2004137127 and US4144229.

### SUMMARY

In general, this disclosure is directed to techniques for processing a miscella stream to remove impurities and particulates, improving the quality and efficiency of the overall extraction process. The miscella stream may be produced through extraction of a feed stream in which the feed stream is exposed to a solvent, causing solventextractable components of the feed steam to extract out into the solvent and thereby form the miscella. In some examples, the miscella stream produced through extraction is thermally and mechanically processed to flocculate and remove impurities in the miscella stream. The miscella stream is thermally cooled to cause solids dissolved or suspended within the liquid stream to come out of solution, agglomerate, or otherwise solidify for removal. The resulting cooled stream may be mechanically separated, for example through centrifugation, to remove the solid material from the stream. In some configurations, the wetted solid material filtered out of the miscella stream is recombined with a solvent-wet solids stream produced by the extractor (and/or a dried solids stream produced after the solvent-wet solids stream from the extractor has undergone one or more desolventization steps). The combined stream may be mechanically and/or thermally processed to remove solvent and dry the stream.

The miscella stream being processed to remove residual solid impurities is generated by an extractor, for example, using an alcohol solvent. In some applications, the solvent is ethanol, although other solvents may be used. The feedstock for the extraction may be an oleaginous organic material, such as a soy material, which has undergone earlier processing. The the micella stream is a secondary miscella stream produced through extraction of a feedstock that has already undergone an initial extraction. The extracted solid material produced from the initial extraction can function as the feedstock for a secondary extraction, e.g., using a different solvent than the first extractor.

As one example, a soy protein concentrate production process may involve performing multiple liquid extraction steps on a soy feedstock. The soy may be subject to a hexane extraction step to produce a first miscella stream and a solvent-wet soy meal stream. The solvent-wet soy meal stream is desolventized and then subject to a second ethanol extraction step to produce a second miscella stream and a solvent-wet soy protein concentrate steam. To purify and recover the second miscella stream, the stream is chilled to flocculate solid impurities and then passed through a mechanical separation device, such as a centrifuge. In some configurations, the resulting solid impurities from the mechanical separation process are combined with solvent wet solids from the second extraction step for processing through one or more desolventization steps. For example, the stream produced from the separation device containing solids removed from the miscella may be combined with a solvent-wet solids stream from the extractor and processed by a mechanical press to remove liquid before subsequently being thermally processed to remove residual solvent. Additionally or alternatively, the stream produced from the separation device containing solids removed from the miscella may be combined with a dried solids stream from the extractor (e.g., a resultant stream after the solvent-wet solids stream from the extractor has undergone one or more thermal desolventization steps and optionally been cooled). This combined stream can then be processed through the one or more thermal desolventization steps.

In one example, an extraction system is described that includes a first extractor, a desolventizer, a second extractor, at least one heat exchanger, and a mechanical separation device. The first extractor has a feed inlet, a feed outlet, a solvent inlet, and a solvent outlet. The feed inlet is configured to receive a solid material to be subject to extraction, the feed outlet is configured to discharge a first solid material having undergone extraction, the solvent inlet is configured to receive a first solvent, and the solvent outlet is configured to discharge a first miscella formed via extraction of extractable components from the solid material. The desolventizer is configured to receive the first solid material having undergoing extraction and heat the first solid material to vaporize solvent from the first solid material and produce a desolventized solid material. The second extractor has a feed inlet, a feed outlet, a solvent inlet, and a solvent outlet. The feed inlet is configured to receive the desolventized solid material from the desolventizer, the feed outlet is configured to discharge a second solid material having undergone extraction, the solvent inlet is configured to receive a second solvent, and the solvent outlet is configured to discharge a second miscella formed via extraction of extractable components from the desolventized material. The heat exchanger is positioned downstream of the second extractor and configured to receive and cool the second miscella stream and produce a cooled second miscella stream. The mechanical separation device is positioned downstream of the heat exchanger and configured to separate solid material from the cooled second miscella stream, producing a separated solids stream and a purified miscella stream.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example extraction system according to the disclosure.
FIG. 2 is a flow diagram illustrating an example process for processing a second miscella stream produced from a second extractor, such as that discussed with respect to FIG. 1.

### DETAILED DESCRIPTION

In general, the disclosure relates to processes that enable the extraction of one or more desire products from solid material flows. In some examples, the solid material is processed in a continuous flow extractor that conveys a continuous flow of material from its inlet to its outlet while a solvent is conveyed in a countercurrent direction from a solvent inlet to a solvent outlet. As the solvent is conveyed from its inlet to its outlet, the concentration of extracted liquid relative to solvent increases from a relatively small extract-to-solvent ratio to a comparatively large extract-to-solvent ratio. Similarly, as the solid material is conveyed in the opposing direction, the concentration of extract in the solid feedstock decreases from a comparatively high concentration at the inlet to a comparatively low concentration at the outlet. The amount of time the solid material remains in contact with the solvent within the extractor (which may also be referred to as residence time) can vary, for example depending on the material being processed and the operating characteristics of the extractor, although will typically be within the range of 15 minutes to 3 hours, such as from 1 hour to 2 hours.

The solvent discharged from the extractor, which may be referred to as a miscella, contains extracted components (e.g., oil, carbohydrates, sugars) from the solid feedstock. The solvent-wet solid material discharged from the extractor may be residual solid feedstock having undergone extraction. In some configurations according to the present disclosure, the miscella stream produced from the extractor is processed to remove impurities from the miscella stream. In one configuration, for example, the miscella stream is received from the extractor and cooled to a temperature below ambient temperature. For example, the miscella stream may be cooled to a temperature below ambient temperature but above the freezing point of water (and/or the freezing point of the solvent used during the extraction process). The cooling process may cause certain impurities in the miscella to solidify and/or grow in particle size via crystallization, agglomeration, flocculation, solidification and/or other growth mechanism. In either case, the cooling process may cause impurities in the miscella to come out of solution, allowing the impurities to be mechanically separated from the miscella stream.

According, the cooled miscella stream may be passed through a mechanical separation device after the cooling process to separate the solid impurities from a remainder of the miscella steam. In some configurations, a settling tank is positioned before the mechanical separation device to gravity settle a portion of the solid impurities from the miscella stream before passing the miscella stream (or portion thereof) through the mechanical separation device. This can reduce the size of the mechanical separation device needed for to process the stream as compared to if the entire miscella stream is passed through the mechanical separation device. The solid material separated out of the miscella stream can be discharged downstream for processing and/or disposal. In some configurations, the solid material separated out of the miscella stream is recycled and combined with solvent-wet solids produced by the extractor. The combined stream may be mechanically desolventized and/or thermally desolventized before being discharged for further downstream processing. Alternatively, the solid material separated out of the miscella stream can be combined with partially or fully dried solids generated by desolventizing solvent-wet solids produced by the extractor

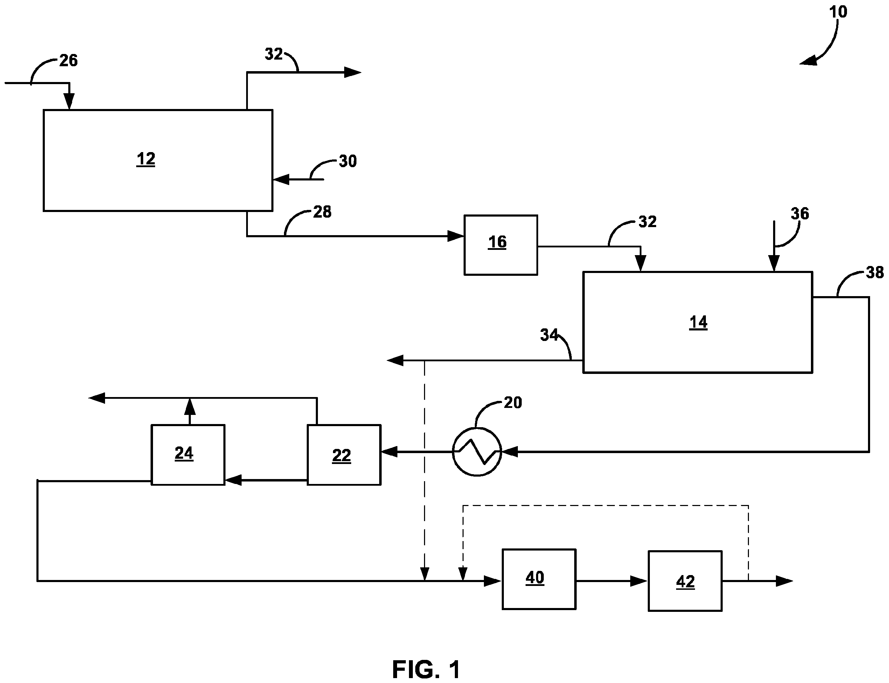

A miscella stream processed using systems and techniques according to the disclosure may be generated from a variety of different extraction systems and under a variety of different extraction conditions. FIG. 1 below describes an example extraction system in which a miscella stream is generated as a secondary miscella stream following a second extraction step in which the extracted solids from a first extraction step are used as a feed stock for the second extraction.

FIG. 1 is a block diagram illustrating an example extraction system 10 according to the disclosure. System 10 includes a first extractor 12, a second extractor 14, and a desolventizer 16. System 10 is also illustrated as having one or more heat exchangers 20, a settling tank 22, and a mechanical separation device 24. The first extractor 12 has a feed inlet 26 that can receive a solid material to be subject to extraction within the extractor. First extractor 12 also has a feed outlet 28 that can discharge the solid particulate material after is has undergone extraction and has a lower concentration of extract than the fresh incoming material. First extractor 12 also has a solvent inlet 30 configured to introduce fresh solvent into the extractor and a solvent outlet 25 configured to discharge a miscella formed via extraction of extractable components from the solid material.

In operation, the solid material being processed is contacted with solvent within first extractor 12 (e.g., in a co-current or counter current fashion), causing components soluble within the solvent to be extracted from the solid material into the solvent. First extractor 12 can process any desired solid material using any suitable extraction fluid. Example types of solid material that can be processed using first extractor 12 include, but are not limited to, oleaginous matter, such as soybeans (and/or soy protein concentrate), rapeseed (e.g., canola), sunflower seed, peanuts, cottonseed, palm kernels, and corn germ; oil-bearing seeds and fruits; asphalt-containing materials (e.g., asphalt-containing roofing shingles that include an aggregate material such as crushed mineral rock, asphalt, and a fiber reinforcing); stimulants (e.g., nicotine, caffeine); alfalfa; almond hulls; anchovy meals; bark; coffee beans and/or grounds, carrots; chicken parts; chlorophyll; diatomic pellets; fish meal; hops; oats; pine needles; tar sands; vanilla; and wood chips and/or pulp. These materials (or an extracted residual solid thereof) can be fed into extractor 14 without having passed through first extractor 12 in configurations in which system 10 does not include a first extractor. Solvents that can be used for extraction from solid material include, but are not limited to a hydrocarbon (e.g., acetone, hexane, toluene), alcohol (e.g., isopropyl alcohol, ethanol, other alcohols), and water. In one example, first extractor 12 processes soy material (e.g., dehulled and flaked soy beans) using a hexane solvent.

First extractor 12 can produce a solvent-wet solids stream that discharges through feed outlet 28. To recover solvent from the solvent-wet solids steam and further prepare the residual solids material for end use, the solvent-wet solids stream is desolventized using thermal, and optionally mechanical, desolventization devices. In the example of FIG. 1, system 10 includes a desolventizer 16. Desolventizer 16 can be implemented using one or more stages of thermal, and optionally mechanical, treatment to remove solvent from the solvent-wet solids stream. Desolventizer 16 heats the solvent-wet solids stream to vaporize solvent from the stream, optionally with injection of steam, to produce a desolventized solid material. It should be appreciated that the term desolventized solid material refers to a material that is comparatively desolventized and does not require complete desolventization or that the material be devoid of solvent. Rather, the material may be desolventized to a practical level effective for downstream use and/or processing. In different examples, desolventizer 16 can be implemented using a distillation column and/or desolventizer-toaster.

In the example of FIG. 1, system 10 includes second extractor 14 that is configured to receive the desolventized solid material from desolventizer 16. Second extractor 14 has a feed inlet 32 that can receive the desolventized solid material for subsequent extraction within the extractor. Second extractor 14 also has a feed outlet 34 that can discharge a second solid material after it has under extraction and has a lower concentration of extract than the fresh desolventized solid material. Second extractor 14 also has a solvent inlet 36 configured to introduce solvent into the extractor and a solvent outlet 38 is configured to discharge a second miscella formed via extraction of extractable components from the particulate material.

In operation, the material being processed in second extractor 14 is contacted with solvent within the extractor (e.g., in a co-current or counter current fashion), causing components soluble within the solvent (e.g., sugar, carbohydrates) to be extracted from the particulate matter into the solvent. The solvent used in second extractor 14 may be the same as or different than the solvent used in the first extractor 12. In some applications, the desolventized solid material being processed in second extractor 14 is a soy meal and the second solvent used in the extractor is an alcohol, such as ethanol.

The second miscella stream produced via second extractor 14 can be further processed to cleanup and remove impurities from the stream. In the example of FIG. 1, the second miscella stream is passed through one or more heat exchangers 20 downstream of the second extractor 14. The heat exchangers can cool the second miscella stream and produce a cooled second miscella stream. The heat exchanger 20 can cool the second miscella stream to a temperature below the operating temperature of second extractor 14 and may also cool the second miscella stream to a temperature below ambient temperature. In some examples, heat exchanger 20 can cool the second miscella stream to a temperature less than 30 degrees Celsius, such as a temperature ranging from 5 degrees Celsius to 20 degrees Celsius. Heat exchanger 20 may be implemented as a shell and tube heat exchanger, a cooled settling vessel, or yet other process device that reduces the temperature of the second miscella stream.

In some configurations, the process of FIG. 1 includes a gravity settling vessel 22. The gravity settling vessel 22 may provide residence time in which the second miscella stream can reside in a non-flowing state, allowing solid material to gravity settle out of the second miscella stream. Liquid from which solid material has gravity settled out of the second miscella can be drawn off of the top of the vessel while an impurities stream (including settled solids material) can be drawn off the bottom of the vessel.

Independent of whether the system includes a gravity settling vessel 22, the system may include a mechanical separation device 24. Separation device 24 can be configured to receive the second miscella stream (or portion thereof) and separate out at least a portion of the solid / particulate matter contained within the miscella stream. Separation device 24 can be implemented using a number of different pieces of separation equipment, such as a hydroclone, a centrifuge, and/or a filter.

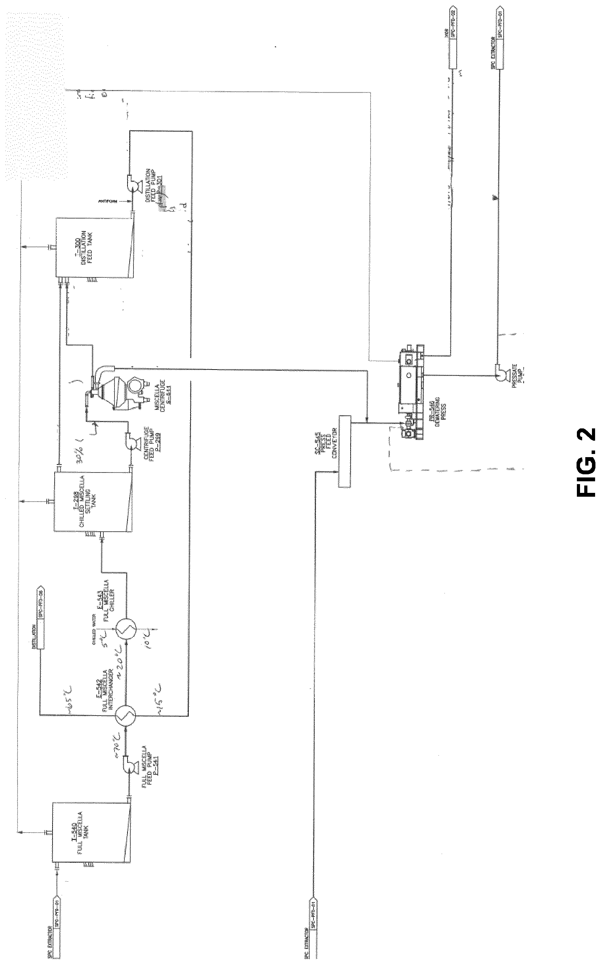

In some applications, the solid material having been separated from the second miscella stream (along with any residual, wetting solvent) is desolventized using mechanical and/or thermal desolventization devices. In the example of FIG. 2, system 10 includes a press device 40 and a desolventizer 42. Press device can mechanically press the solvent-wet solids stream to squeeze solvent out of the stream, resulting in a solvent-wet solids stream having a lower solvent concentration than the stream entering the press device. Desolventizer 42 can heat the solvent-wet solids stream to vaporize solvent from the stream, optionally with injection of steam, to produce a desolventized solid material. Again, it should be appreciated that the term desolventized solid material refers to a material that is comparatively desolventized and does not require complete desolventization or that the material be devoid of solvent. Rather, the material may be desolventized to a practical level effective for downstream use and/or processing. Desolventizer 42 can be implemented using one or more stages of heating, e.g., using a distillation column and/or desolventizer-toaster.

In one example, the solid material having been separated from the second miscella stream is combined with the solvent-wet solids stream produced by first extractor 12 and/or second extractor 14 and/or another dry solids material produced in the production process (e.g., hulls produced during dehulling). For example, the solid material having been separated from the second miscella stream can be combined with the solvent-wet solids stream produced by the second extractor 14 upstream of the pressing device 40 and/or desolventizer 42. The combined stream can undergo mechanical pressing followed by heating to remove and recover residual solvent from the solids material.

In other example, the solid material having been separated from the second miscella stream is combined with a desolventized (e.g., dry) solids stream produced using one or more stages of desolventization on the solvent-wet solids stream produced by second extractor 14. For example, a portion of this dried solids stream may be recycled and combined with the solvent-wetted solids stream produced using separation device 24 (e.g., in a mixer). The combination of the dried solids stream with solvent-wetted solids material may function absorb and/or distribute the solvent among the solids stream, which may help prevent fouling in a desolventizer that may otherwise occur if introducing a wet, solvent-laden stream into the desolventizer. When so configured, system 10 may or may not include a pressing device 40 upstream of the one or more desolventizer units 42.

First extractor 12 and second extractor 14 can be implemented using any suitable type of extractor configurations. For example, first extractor 12 and second extractor 14 may each be an immersion extractor, a percolation extractor, or yet other type of extractor design.

FIG. 2 is a flow diagram illustrating an example process for processing a second miscella stream produced from a second extractor, such as that discussed above with respect to FIG. 1.

Various examples have been described. These and other examples are within the scope of the following claims.

## Claims

1. An extraction method comprising the step of:
- providing a solid material to be subject to extraction to a feed inlet (26) of a first extractor (12),
- providing a first solvent to a solvent inlet (30) of the first extractor (12);
- discharging the solid material having undergone extraction through a feed outlet (28) of the first extractor (12);
- discharging a first miscella formed via extraction of extractable components from the solid material through a solvent outlet (25) of the first extractor (12);
- heating the first solid material in a desolventizer (16) to vaporize solvent from the first solid material and produce a desolventized solid material;
- providing the desolventized solid material from the desolventizer (16) to a feed inlet (32) of a second extractor (14);
- providing a second solvent to a solvent inlet (36) of the second extractor (14);
- discharging a second solid material having undergone extraction through a feed outlet (34) of the second extractor (14),
- discharging a second miscella formed via extraction of extractable components from the desolventized material through a solvent outlet (38) of the second extractor (14);
- providing the second miscella stream to at least one heat exchanger (20) downstream of the second extractor (14);
- cooling the second miscella stream by the at least one heat exchange to cause impurities in the second miscella to solidify and produce a cooled second miscella stream;
- separating the solidified impurities from the cooled second miscella stream by a mechanical separation device (24) downstream of the at least one heat exchanger; and
- producing a separated impurities stream and a purified miscella stream.

2. An extraction method according to claim 1 wherein the desolventizer (16) is a desolventizer-toaster.

3. An extraction method according to claim 1 wherein it comprises the step of:
- cooling though at least one heat exchanger (20) the second miscella stream to a temperature less than 30 degrees Celsius, preferably to a temperature ranging from 5 degrees Celsius to 20 degrees Celsius.

4. An extraction method according to claim 1 wherein the solid material is selected from the group consisting of soy, rapeseed, and combinations thereof.

5. An extraction method according to claim 1 wherein the first solvent comprises hexane.

6. An extraction method according to claim 1 wherein the second solvent comprises ethanol.

## Patentansprüche

1. Extraktionsverfahren, umfassend die Schritte:
- Bereitstellen eines festen Materials, das einer Extraktion unterzogen werden soll, einem Zuführeinlass (26) eines ersten Extrators (12),
- Bereitstellen eines ersten Lösungsmittels einem Lösungsmitteleinlass (30) des ersten Extraktors (12);
- Abführen des festen Materials, das der Extraktion unterzogen wurde, durch einen Zuführauslass (28) des ersten Extraktors (12);
- Abführen einer ersten Miszella, die über Extraktion von extrahierbaren Komponenten aus dem festen Material gebildet wird, durch einen Lösungsmittelauslass (25) des ersten Extraktors (12);
- Erhitzen des ersten festen Materials in einem Desolventizer (16), um Lösungsmittel aus dem ersten festen Material verdampfen zu lassen und ein desolventisiertes festes Material zu erzeugen;
- Bereitstellen des desolventisierten festen Materials aus dem Desolventizer (16) einem Zuführeinlass (32) eines zweiten Extraktors (14);
- Bereitstellen eines zweiten Lösungsmittels einem Lösungsmitteleinlass (36) des zweiten Extraktors (14);
- Abführen eines zweiten festen Materials, das der Extraktion unterzogen wurde, durch einen Zuführauslass (34) des zweiten Extraktors (14),
- Abführen einer zweiten Miszella, die über Extraktion von extrahierbaren Komponenten aus dem desolventisierten Material gebildet wird, durch einen Lösungsmittelauslass (38) des zweiten Extraktors (14);
- Bereitstellen des zweiten Miszella-Stroms mindestens einem Wärmetauscher (20) stromabwärts des zweiten Extrators (14);
- Kühlen des zweiten Miszella-Stroms durch den mindestens einen Wärmetauscher, um Verunreinigungen in der zweiten Miszella zu bewirken, um einen gekühlten zweiten Miszella-Strom zu erzeugen und ihn zu verfestigen;
- Trennen der verfestigten Verunreinigungen von dem gekühlten zweiten Miszella-Strom durch eine mechanische Trennungsvorrichtung (24) stromabwärts des mindestens einen Wärmetauschers; und
- Erzeugen eines getrennten Verunreinigungsstroms und eines gereinigten Miszella-Stroms.

2. Extraktionsverfahren nach Anspruch 1, wobei der Desolventizer (16) ein Desolventizer-Toaster ist.

3. Extraktionsverfahren nach Anspruch 1, wobei es den Schritt umfasst:
- Kühlen durch mindestens einen Wärmetauscher (20) des zweiten Miszella-Stroms auf eine Temperatur von weniger als 30 Grad Celsius, vorzugsweise auf eine Temperatur, die von 5 Grad Celsius bis 20 Grad Celsius reicht.

4. Extraktionsverfahren nach Anspruch 1, wobei das feste Material aus der Gruppe ausgewählt ist, bestehend aus Soja, Raps, und Kombinationen davon.

5. Extraktionsverfahren nach Anspruch 1, wobei das erste Lösungsmittel Hexan umfasst.

6. Extraktionsverfahren nach Anspruch 1, wobei das zweite Lösungsmittel Ethanol umfasst.

## Revendications

1. Procédé d'extraction comprenant l'étape consistant à :
- fournir un matériau solide devant être soumis à une extraction à une entrée d'alimentation (26) d'un premier extracteur (12),
- fournir un premier solvant à une entrée de solvant (30) du premier extracteur (12) ;
- évacuer le matériau solide ayant subi une extraction à travers une sortie d'alimentation (28) du premier extracteur (12) ;
- évacuer une première miscella formée par le biais de l'extraction de composants extractibles du matériau solide à travers une sortie de solvant (25) du premier extracteur (12) ;
- chauffer le premier matériau solide dans un désolvantiseur (16) pour vaporiser un solvant à partir du premier matériau solide et produire un matériau solide désolvantisé ;
- fournir le matériau solide désolvantisé provenant du désolvantiseur (16) à une entrée d'alimentation (32) d'un second extracteur (14) ;
- fournir un second solvant à une entrée de solvant (36) du second extracteur (14) ;
- évacuer un second matériau solide ayant subi une extraction à travers une sortie d'alimentation (34) du second extracteur (14),
- évacuer une seconde miscella formée par le biais de l'extraction de composants extractibles à partir du matériau désolvantisé à travers une sortie de solvant (38) du second extracteur (14) ;
- fournir le courant de seconde miscella à au moins un échangeur de chaleur (20) en aval du second extracteur (14) ;
- refroidir le courant de seconde miscella par l'au moins un échange thermique pour amener des impuretés dans la seconde miscella à se solidifier et produire un courant de seconde miscella refroidi ;
- séparer les impuretés solidifiées du courant de seconde miscella refroidi par un dispositif de séparation mécanique (24) en aval de l'au moins un échangeur de chaleur ; et
- produire un courant d'impuretés séparées et un courant de miscella purifié.

2. Procédé d'extraction selon la revendication 1 dans lequel le désolvantiseur (16) est un désolvantiseur-toaster.

3. Procédé d'extraction selon la revendication 1 **caractérisé en ce qu'**il comprend l'étape consistant à :
- refroidir au moyen d'au moins un échangeur de chaleur (20) le courant de seconde miscella à une température inférieure à 30 degrés Celsius, de préférence à une température dans la plage de 5 degrés Celsius à 20 degrés Celsius.

4. Procédé d'extraction selon la revendication 1 dans lequel le matériau solide est choisi dans le groupe constitué par du soja, du colza et des combinaisons de ceux-ci.

5. Procédé d'extraction selon la revendication 1 dans lequel le premier solvant comprend de l'hexane.

6. Procédé d'extraction selon la revendication 1 dans lequel le second solvant comprend de l'éthanol.
